# EUROPEAN PATENT SPECIFICATION

(11) **EP 2 445 167 B1**
(45) Date of publication and mention of the grant of the patent: **11.12.2019**
(21) Application number: 11185658.9
(22) Date of filing: 18.10.2011
(51) Int. Cl.: H04L 29/06

(54) **Communication device and computer program**
Kommunikationsvorrichtung und Computerprogramm
Dispositif de communication et programme informatique

(30) Priority: 22.10.2010 JP 2010237247
(43) Date of publication of application: 25.04.2012
(73) Proprietor: Brother Kogyo Kabushiki Kaisha, Nagoya, Aichi 467-8561 (JP)
(72) Inventor: Yanagi, Satoru, Nagoya, Aichi 467-8562 (JP)
(74) Representative: J A Kemp LLP

(56) References cited:
- WO-A1-2009/049685
- US-A1- 2006 121 924
- "3rd Generation Partnership Project; Technical Specification Group Services and System Aspects; IP Multimedia Subsystem (IMS); Stage 2 (Release 10)", 3GPP STANDARD; 3GPP TS 23.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.2.0, 29 September 2010 (2010-09-29), pages 1-273, XP050442321, [retrieved on 2010-09-29]

## Description

### TECHNICAL FIELD

The present invention relates a communication device that transmits and receives target data, which is transmitted and received, to and from a communication destination device.

### BACKGROUND

WO 2003/021911 A1 discloses the following technique. A transmission side device transmits all encoding methods (medium types) available to the transmission side device itself to a reception side device. The reception side device transmits one or more encoding methods available to the reception side device itself to the transmission side device. The transmission side device selects one encoding method from the one or more encoding methods received from the reception side device. The transmission side device transmits an INVITE command including the selected one encoding method to the reception side device. As a result, a communication session is established between the reception side device and the transmission side device. "3rd Generation Partnership Project; Technical Specification Group Services and System Aspects; IP Multimedia Subsystem (IMS); Stage 2 (Release 10), 3GPP STANDARD; 3GPP TS 23.228, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. V10.2.0, 29 September 2010 (2010-09-29), pages 1-273, XP050442321" describes the stage-2 service description for the IP Multimedia Core Network Subsystem (IMS), which includes the elements necessary to support IP Multimedia (IM) services. ITU-T Recommendation 1.130 describes a three-stage method for characterisation of telecommunication services, and ITU-T Recommendation Q.65 defines stage 2 of the method. It identifies the mechanisms to enable support for IP multimedia applications. In order to align IP multimedia applications wherever possible with non-3GPP IP applications, the general approach is to adopt non-3GPP specific IP based solutions.

### SUMMARY

Incidentally, if an encoding method unavailable to the reception side device is included in the encoding methods which are transmitted from the transmission side device to the reception side device, there is a type (hereinafter, referred to as a "specific type") of the reception side device which does not transmit the encoding method available to the reception side device to the transmission side device, but transmits an NG command to the transmission side device.

Illustrative aspects of the invention provide a technique capable of appropriately establishing a communication session between a pair of devices.

According to a first aspect of the invention, there is provided a communication device as defined in appended independent claim 1.

According to the illustrative aspects of the invention, the communication device can execute the process of transmitting the second kind of communication request (the first kind of communication request) if the communication session is not established through the transmission of the first kind of communication request (the second kind of communication request). For this reason, for example, even if the communication destination device is a device of the specific type, it is possible to repeatedly transmit the communication request while changing information included in the communication request in order to establish an appropriate session. In addition, the communication device executes the first kind of request process in which the first kind of communication request is typically transmitted during the first time period, and executes the second kind of request process in which the second kind of communication request is typically transmitted during the second time period. The communication device tries the second kind of request process at a predetermined timing within the first time period. The first time period is transitioned to the second time period if the communication session is established through the transmission of the second kind of communication request in the corresponding trial. As a result, typically, the communication device first transmits the communication request (the second kind of communication request) having a high possibility that the communication session may be established. Therefore, there is a low possibility that the communication device may transmit the first kind of communication request after the second kind of communication request is transmitted. For this reason, it is possible to suppress an increase in the communication load between the communication device and the communication destination device.

In addition, according to a second aspect of the invention, there is provided a computer program, according to independent claim 6, for being executed on a computer installed in a communication device.

Further embodiments are defined in the dependent claims.

### BRIEF DESCRIPTION OF THE DRAWINGS

Fig. 1 shows a configuration of a communication system;
Fig. 2 shows a flowchart of an activation process;
Fig. 3 shows a flowchart of a main process;
Fig. 4 shows a flowchart of a communication process according to a priority order;
Fig. 5 shows a flowchart of a default communication process;
Fig. 6 shows an example of the time chart regarding processes performed by a multi-function device according to a first exemplary embodiment; and
Fig. 7 shows an example of the time chart regarding processes performed by a multi-function device according to a second exemplary embodiment.

### DETAILED DESCRIPTION

### <FIRST EXEMPLARY EMBODIMENT>

### (CONFIGURATION OF SYSTEM)

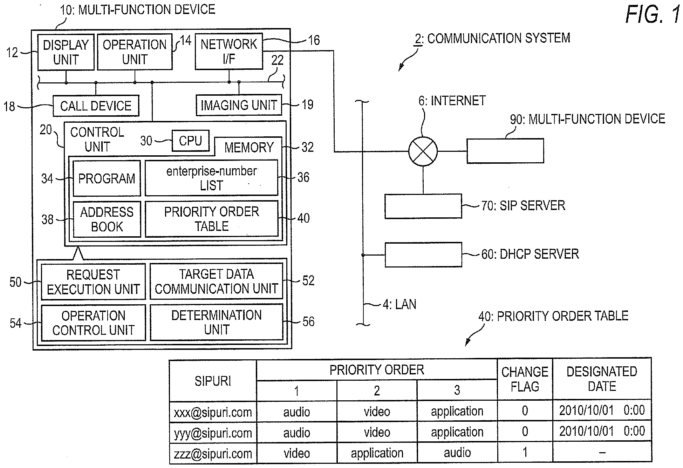

As shown in Fig. 1, a communication system 2 includes a LAN 4, the Internet 6, multi-function devices (one example of a communication device) 10 and 90, a DHCP (Dynamic Host Configuration Protocol) server 60, and an SIP (Session Initiation Protocol) server 70. The multi-function device 10 and the DHCP server 60 are connected to the LAN 4. The multi-function device 10 and the DHCP server 60 can communicate with each other via the LAN 4. The SIP server 70 and the multi-function device 90 are connected to the Internet 6. The multi-function device 10, the multi-function device 90, and the SIP server 70 can communicate with each other via the Internet 6.

### (CONFIGURATION OF MULTI-FUNCTION DEVICE 10)

The multi-function device 10 can realize multiple functions including an IP voice phone function, an IPTV phone function, an SMS (Short Message Service) function, and the like. The IP voice phone function is a function for transmitting and receiving audio data using a SIPURI (SIP Uniform Resource Identifier). Incidentally, video data is not transmitted and received in the IP voice phone function. The IPTV phone function is a function for transmitting and receiving audio data and video data using the SIPURI. The SMS function is a function for transmitting and receiving a message using the SIPURI.

The multi-function device 10 includes a display unit 12, an operation unit 14, a network interface 16, a call device 18, an imaging unit 19, and a control unit 20. The respective parts 12 to 20 are connected to a bus line 22. Incidentally, the multi-function device 90 has the same configuration as the multi-function device 10.

The display unit 12 is a display for displaying a variety of information. The operation unit 14 includes a plurality of keys. A user can input various instructions to the multi-function device 10 by operating the operation unit 14. The network interface 16 is connected to the LAN 4. The call device 18 includes a speaker and a microphone (not shown). The user can make a voice call using the speaker and the microphone of the call device 18. The imaging unit 19 includes imaging elements such as a CCD, and generates video data by shooting subjects.

The control unit 20 includes a CPU 30 and a memory 32. The memory 32 stores a program 34, an enterprise-number list 36, an address book 38, and a priority order table 40. The CPU 30 executes various processes according to the program 34 stored in the memory 32. The CPU 30 executes processes according to the corresponding program 34 and realizes functions of the respective parts 50 to 56.

### (ENTERPRISE-NUMBER LIST 36)

The enterprise-number list 36 includes a plurality of enterprise-numbers for identifying a plurality of providers for realizing SIP communication of the multi-function device 10. The enterprise-number list 36 is stored in the memory 32 in advance at the shipping stage of the multi-function device 10. The vendor of the multi-function device 10 investigates providers which provide an SIP server which may not realize the IPTV phone function but can realize the IP voice phone function, and registers corresponding providers in the enterprise-number list 36. There is a possibility that the SIP server may be changed to a specification capable of realizing the IPTV phone function in the future. That is, the enterprise-number list 36 registers therein providers for which the specification may not realize the IPTV phone function at present but may be changed to a specification capable of realizing the IPTV phone function in the future.

### (ADDRESS BOOK 38)

The address book 38 includes SIPURIs, mail addresses, phone numbers, and the like, input by a user.

### (PRIORITY ORDER TABLE 40)

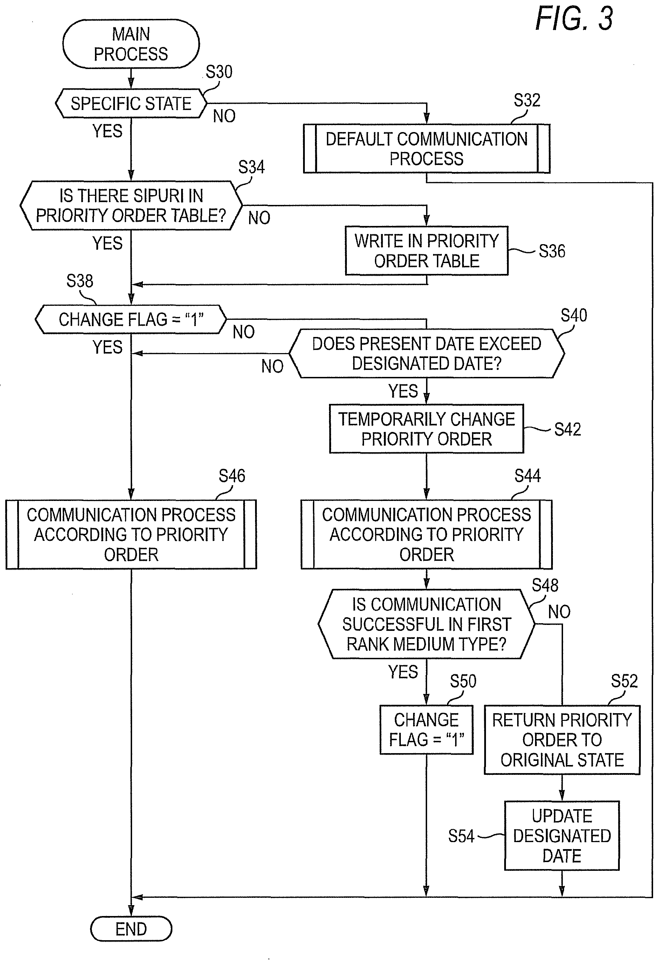

The priority order table 40 is a table which correlates the SIPURI, a priority order of the respective medium types, a change flag, and the designated date with each other. The priority order of the respective medium types indicates a priority order of three kinds of medium types of "audio", "video", and "application". Incidentally, the "audio" corresponds to the IP voice phone function, the "video" corresponds to the IPTV phone function, and the "application" corresponds to a function of transmitting and receiving audio data, video data, and message data (SMS) at the same time. The multi-function device 10 uses a medium type according to a priority order correlated with a corresponding SIPURI when communication with a communication destination device specified by the SIPURI is performed (which will be described later in detail). The change flag is a flag indicating whether or not the priority order is changed. In the exemplary embodiment, "0" indicates unchanged, and "1" indicates changed. The designated date is the date used as a reference of whether or not the priority order is temporarily changed. Incidentally, each piece of information in the priority order table 40 is written in the priority order table 40 in step S36 of Fig. 3 (which will be described later).

### (CONFIGURATION OF SIP SERVER 70)

The SIP server 70 stores an IP address of a corresponding device and an SIPURI of the corresponding device so as to be correlated with each other for each of a plurality of devices (for example, the multi-function devices 10 and 90). The SIP server 70 transmits commands which are transmitted from one device to the other device in order to establish a communication session between a pair of devices.

### (CONFIGURATION OF DHCP SERVER 60)

The DHCP server 60 allocates IP addresses to the respective devices (the multi-function device 10 and the like) connected to the LAN 4. In addition, the DHCP server 60 stores DHCP information. The DHCP information includes option120 (an IP address of the SIP server 70) and option125 (provider information indicating a provider), which will be described later.

### (ADVANCE PREPARATIONS OF USER)

Before description of each process executed by the multi-function device 10, advance preparations made by a user of the multi-function device 10 will be described. First, the user makes a contract with any one provider to build a state where the multi-function device 10 can perform SIP communication. Hereinafter, the provider with which the user has made a contract is referred to as a "contract provider". The contract provider allocates a SIPURI to the multi-function device 10. The SIPURI of the multi-function device 10 is registered in a SIP server (for example, the SIP server 70) provided by the contract provider. According thereto, the multi-function device 10 can establish communication session with other devices via the corresponding SIP server.

In addition, the user registers an enterprise-number indicating the contract provider and an IP address of the SIP server provided by the contract provider in the DHCP server 60. The registration work is executed by, for example, a PC (not shown) connected to the LAN 4. Incidentally, hereinafter, a case where the SIP server provided by the contract provider is the SIP server 70 will be described as an example.

### (PROCESSES EXECUTED BY MULTI-FUNCTION DEVICE 10)

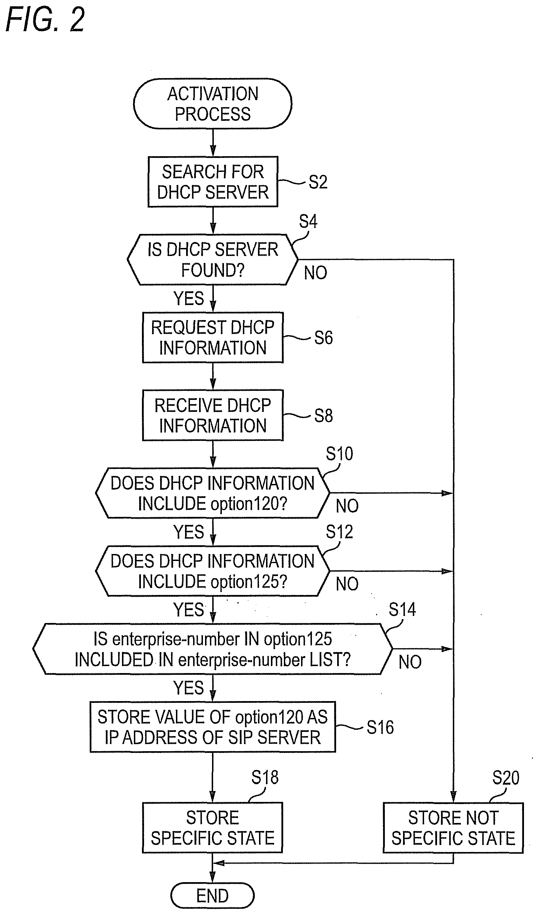

Next, each process performed by the control unit 20 of the multi-function device 10 will be described with reference to Figs. 2 to 5.

### (ACTIVATION PROCESS)

The activation process in Fig. 2 is a process for determining whether or not the multi-function device 10 is in a specific state. The specific state indicates a state where the multi-function device 10 can establish a communication session with other devices via a SIP server provided by any one provider registered in the enterprise-number list 36. In other words, the specific state indicates a state where the user of the multi-function device 10 makes a contract with any one provider registered in the enterprise-number list 36.

When the multi-function device 10 is powered on, in step S2, a determination unit 56 (refer to Fig. 1) broadcasts a search command for searching for the DHCP server 60 connected to the LAN 4. Upon receiving the search command, the DHCP server 60 connected to the LAN 4 transmits a response packet including an IP address thereof to the multi-function device 10. After broadcasting the search command, the determination unit 56 determines whether or not the DHCP server 60 connected to the LAN 4 is found in step S4. The determination unit 56 determines YES in step S4 if a response packet is received within a predetermined time after broadcasting the search command. If the result determined in step S4 is affirmative (YES), the flow proceeds to step S6. On the other hand, if the result determined in step S4 is negative (NO), the flow proceeds to step S20.

In step S6, the determination unit 56 transmits a request command for making a request for transmission of DHCP information including option120 and option125 to the DHCP server 60. Upon receiving the request command, the DHCP server 60 transmits the DHCP information to the multi-function device 10. Incidentally, the option120 includes an IP address of the SIP server 70 provided by the contract provider, and the option125 includes provider information indicating the above contract provider. The provider information included in the option125 includes an enterprise-number of the above contract provider. In step S8, the determination unit 56 receives the DHCP information transmitted from the DHCP server 60.

Next, in step S10, the determination unit 56 determines whether or not the received DHCP information includes the optionl20. For example, in a case where an IP address of the SIP server 70 is registered in the DHCP server 60 in advance by the user, the DHCP information includes option120 indicating the IP address of the SIP server 70. In this case, the result determined in step S10 is affirmative (YES). On the other hand, for example, in a case where an IP address of the image reading unit 70 is not registered in the DHCP server 60 by the user (for example, in a case where the user does not make a contract with a provider), the DHCP information does not include the optionl20. In this case, the result determined in step S10 is negative (NO).

If the DHCP information includes the option120 (that is, YES in step S10), the determination unit 56 determines whether or not the DHCP information includes option125 in step S12. For example, in a case where an enterprise-number of the contract provider is registered in the DHCP server 60 in advance, the DHCP information includes the option125 indicating the enterprise-number of the contract provider. In this case, the result determined in step S12 is affirmative (YES). On the other hand, for example, in a case where an enterprise-number of the contract provider is not registered in the DHCP server 60 (for example, the user does not make a contract with a provider), the DHCP information does not includes the optionl25. In this case, the result determined in step S12 is negative (NO).

If the DHCP information includes the option125 (that is, YES in step S12), the determination unit 56 determines whether or not the enterprise-number included in the option125 is included in the enterprise-number list 36 (refer to Fig. 1) in step S14. If the result determined in step S14 is affirmative (YES) in step S16, the determination unit 56 stores a value indicated by the option120 in the memory 32 as an IP address of the SIP server 70. Thereafter, in step S18, the determination unit 56 stores determination result information indicating that the multi-function device 10 is in the specific state, in the memory 32. When the process in step S18 is completed, the activation process ends.

Incidentally, if the result determined in any one of steps S4, S10, S12 and S14 is negative (NO), the determination unit 56 stores determination result information indicating that the multi-function device 10 is not in the specific state, in the memory 32. When the process in step S20 is completed, the activation process ends.

### (MAIN PROCESS)

Next, contents of the main process in Fig. 3 will be described by exemplifying a case where the multi-function device 10 communicates with the multi-function device 90.

This process is performed on the premise that an IP address of the SIP server 70 is stored in the memory 32. If it is determined that the multi-function device 10 is in the specific state in the above-described activation process (YES in step S14 of Fig. 2), the IP address of the SIP server 70 is stored in the memory 32 (S16 of Fig. 2). However, if it is determined that the multi-function device 10 is not in the specific state in the above-described activation process, the IP address of the SIP server 70 is not stored in the memory 32. In this case, the user can know the IP address of the SIP server 70 using a PC (not shown) connected to the LAN 4 by accessing a web site of the contract provider. Next, the user may store the IP address of the SIP server 70 in the memory 32 by operating the operation unit 14 of the multi-function device 10.

The user can designate the SIPURI of the multi-function device 90 as a communication destination through an operation of the operation unit 14. This designating operation may be an operation for selecting the SIPURI of the multi-function device 90 from the address book 38, or may be an operation for inputting the respective characters constituting the SIPURI of the multi-function device 90 in the multi-function device 10. When the above designating operation is performed, the control unit 20 executes the main process in Fig. 3.

In step S30, an operation control unit 54 (refer to Fig. 1) checks whether or not the multi-function device 10 is in the specific state. Specifically, the operation control unit 54 reads the determination result information stored in the memory 32, and determines whether or not the read determination result information indicates that the multi-function device 10 is in the specific state. If the determination result information indicates that the multi-function device 10 is in the specific state, the operation control unit 54 determines an affirmative result (YES) in step S30.

In the exemplary embodiment, the determination unit 56 has already determined whether or not the multi-function device 10 is in the specific state in the above-described activation process (refer to Fig. 2). For this reason, if the designating operation is performed by the user, it is not necessary for the control unit 20 to make the determination again (that is, it is not necessary to execute the processes in steps S2 to S14), but there is a completion only if the determination result is checked (step S30). Since a load of the determination process is higher than a load of the process for checking the determination result information stored in the memory 32, a process load of the multi-function device 10 is low.

### (A CASE WHERE MULTI-FUNCTION DEVICE 10 IS IN SPECIFIC STATE)

If the multi-function device 10 is in the specific state (that is, YES in step S30), the operation control unit 54 determines whether or not the SIPURI of the multi-function device 90 designated by the user is present in the priority order table 40 in step S34. If the SIPURI of the multi-function device 90 designated by the user is present in the priority order table 40 (that is, YES in step S34), the flow proceeds to step S38.

On the other hand, if the SIPURI of the multi-function device 90 designated by the user is not present in the priority order table 40 (that is, NO in step S34), the operation control unit 54 writes the SIPURI of the multi-function device 90 in the priority order table 40 in step S36. In step S36, the operation control unit 54 writes a priority order of the respective medium types, the change flag, and the designated date in the priority order table 40 so as to be correlated with the SIPURI of the multi-function device 90. The priority order of the respective medium types written in step S36 is predefined, where the first rank is "audio", the second rank is "video", and the third rank is "application". In addition, "0" is written as the change flag, and 0:00 of the first day of the next month of the present date is written as the designated date. For example, in a case where the present date is 15:00 on September 10, 2010 in step S36, the operation control unit 54 writes "0:00 on October 1, 2010" as the designated date. When the process in step S36 is completed, the flow proceeds to step S38.

In step S38, the operation control unit 54 determines whether or not the change flag correlated with the SIPURI of the multi-function device 90 is "1". If the change flag is "1" (that is, YES in step S38), a request execution unit 50 (refer to Fig. 1) executes a communication process in step S46. On the other hand, if the change flag is "0" (that is, NO in step S38), the operation control unit 54, in step S40, determines whether or not the present date exceeds the designated date correlated with the SIPURI of the multi-function device 90. If the present date does not exceed the designated date (that is, NO in step S40), the request execution unit 50 executes a communication process in step S46.

On the other hand, if the present date exceeds the designated date (that is, YES in step S40), the operation control unit 54, in step S42, temporarily changes the priority order correlated with the SIPURI of the multi-function device 90. Specifically, in step S42, the operation control unit 54 lowers the first rank medium type (audio) to the lowest rank (the third rank), and heightens the second rank medium type (video) and the third rank medium type (application) to the first and second ranks, respectively. When the process in step S42 is completed, the request execution unit 50 executes the communication process.

### (COMMUNICATION PROCESS ACCORDING TO PRIORITY ORDER (STEPS S44 AND S46 OF Fig. 3))

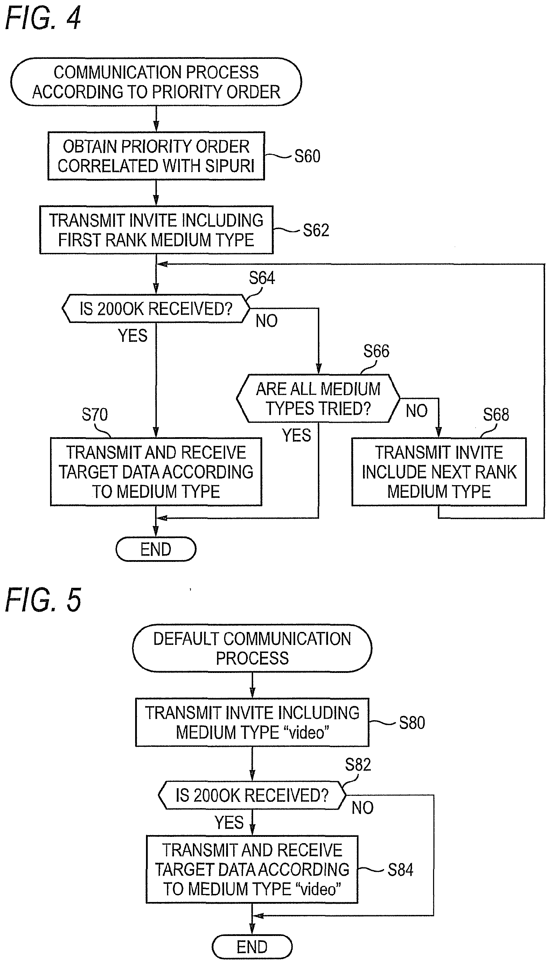

As shown in Fig. 4, in step S60, the request execution unit 50 obtains a priority order correlated with the SIPURI of the multi-function device 90 from the priority order table 40. For example, if the priority order is temporarily changed in step S42 of Fig. 3, the request execution unit 50 obtains the changed priority order in step S60.

Next, in step S62, the request execution unit 50 generates an INVITE command including the first rank medium type in the priority order obtained in step S60. Specifically, in step S62, the request execution unit 50 writes information indicating the first rank medium type (for example, "video" or the like) in the m-th row of the INVITE command. Incidentally, hereinafter, a state where information indicating a medium type is written in the m-th row of the INVITE command is expressed as "m=written medium type (for example, video)" in some cases. In step S62, the request execution unit 50 designates the SIPURI of the multi-function device 90 as a transmission destination, and transmits the INVITE command to the SIP server 70 (S62).

If the medium type included in the INVITE command is a medium type available to the SIP server 70, the SIP server 70 transmits the INVITE command to the multi-function device 90. On the other hand, if the medium type included in the INVITE command is a medium type unavailable to the SIP server 70, the SIP server 70 does not transmit the INVITE command to the multi-function device 90 but transmits an NG command (specifically, 488 Not Acceptable Here) to the multi-function device 10. For example, if the SIP server 70 receives the INVITE command including "m=video" in a state in which the SIP server 70 is capable of realizing the IP voice phone function but is incapable of realizing the IPTV phone function, the SIP server 70 transmits the NG command to the multi-function device 10.

If the medium type included in the INVITE command received from the SIP server 70 is a medium type available to the multi-function device 90, the multi-function device 90 transmits a 2000K command to the SIP server 70. In this case, the SIP server 70 transmits the 2000K command to the multi-function device 10. On the other hand, if the medium type included in the INVITE command is a medium type not available to the multi-function device 90, the multi-function device 90 transmits the NG command to the SIP server 70. In this case, the SIP server 70 transmits the NG command to the multi-function device 10.

In step S64, the request execution unit 50 monitors that the 2000K command is received. When the request execution unit 50 receives the 2000K command (that is, YES in step S64), the request execution unit 50 designates the SIPURI of the multi-function device 90 as a transmission destination, and transmits an ACK command to the SIP server 70. The SIP server 70 transmits the ACK command to the multi-function device 90. Thereby, a communication session corresponding to the medium type included in the INVITE command is established between the multi-function device 10 and the multi-function device 90. For example, if the INVITE command is "m=audio", a communication session (an RTP (Real-time Transport Protocol) for the IP voice phone function) corresponding to the medium type "audio" is established. In this case, audio data can be transmitted and received using the corresponding communication session (video data may not be transmitted and received). Further, for example, if the INVITE command is "m=video", a communication session corresponding to the medium type "video" is established. In this case, audio data and video data can be transmitted and received using the corresponding communication session.

Next, in step S70, a target data communication unit 52 (refer to Fig. 1) transmits and receives communication target data to and from the multi-function device 90 using the communication session established in step S64 without via the SIP server 70. That is, the multi-function device 10 and the multi-function device 90 transmit and receive target data to and from each other by executing peer-to-peer communication. Incidentally, the target data depends on a medium type corresponding to the established communication session. For example, if a medium type corresponding to the established communication session is "audio", the target data includes audio data input to the microphone of the multi-function device 10 and audio data input to the microphone of the multi-function device 90. For example, if a medium type corresponding to the established communication session is "video", the target data includes not only audio data input to the microphones of the respective multi-function devices 10 and 90 but also video data generated by the imaging unit 19 of the multi-function device 10 and video data generated by the imaging unit of the multi-function device 90. In addition, for example, if a medium type corresponding to the established communication session is "application", the target data includes audio data input to the microphones of the respective multi-function devices 10 and 90, video data generated by the imaging unit 19 of the multi-function device 10, and message data input to the operation units 14 of the multi-function devices 10 and 90. When the process in step S70 is completed, the communication process ends in Fig. 4.

As described above, there is a case where the multi-function device 10 does not receive the 2000K command but receives the NG command from the SIP server 70. In this case, the request execution unit 50 determines a negative result (NO) in step S64, and then determines whether or not trials of all the medium types are completed in step S66. If a trial of transmission of the INVITE command is completed with regard to all the three kinds of "audio", "video", and "application", the request execution unit 50 determines an affirmative result (YES) in step S66. If YES in step S66, the communication process in Fig. 4 ends. In this case, a communication session is not established between the multi-function device 10 and the multi-function device 90, and transmission and reception of target data are not performed.

On the other hand, if trials of all the medium types are not completed (that is, NO in step S66), the request execution unit 50, in step S68, transmits an INVITE command including the next rank medium type to the SIP server 70 by designating the SIPURI of the multi-function device 90 as a transmission destination. Next, the flow returns to step S64, where the request execution unit 50 monitors the 2000K command. The respective processes thereafter are the same as described above.

If the communication process in step S46 of Fig. 3 ends, the main process ends. On the other hand, if the communication process in step S44 in Fig. 3 ends, the operation control unit 54, in step S48, determines whether or not a communication session is established through transmission of the INVITE command including the first rank medium type. If YES here, the operation control unit 54, in step S50, changes the change flag correlated with the SIPURI of the multi-function device 90 from "0" to "1". In addition, in step S50, the operation control unit 54 erases the designated date correlated with the SIPURI of the multi-function device 90. When the process in step S50 ends, the main process in Fig. 3 ends.

On the other hand, if a communication session is not established through the transmission of the INVITE command including the first rank medium type (that is, NO in step S48), the operation control unit 54, in step S52, returns the temporarily changed priority order to the original state in step S42. Next, in step S54, the operation control unit 54 updates the designated date correlated with the SIPURI of the multi-function device 90. Specifically, the operation control unit 54 writes 0:00 of the first day of the next month of the present date as the new designated date. If the process in step S54 is completed, the main process in Fig. 3 ends.

### (A CASE WHERE MULTI-FUNCTION DEVICE 10 IS NOT IN SPECIFIC STATE)

If the multi-function device 10 is not in the specific state (that is, NO in step S30), the flow proceeds to step S32. In step S32, the request execution unit 50 executes a default communication process (refer to Fig. 5).

### (DEFAULT COMMUNICATION PROCESS (STEP S32 OF Fig. 3))

As shown in Fig. 5, in step S80, the request execution unit 50 designates the SIPURI of the multi-function device 90 as a transmission designation, and transmits the INVITE command including "m=video" to the SIP server 70. An operation of the SIP server 70 in this case is the same as described above.

In step S82, the request execution unit 50 monitors reception of the 2000K command. When the request execution unit 50 receives the 2000K command (that is, YES in step S82), the request execution unit 50 transmits the ACK command to the SIP server 70 by designating the SIPURI of the multi-function device 90 to a transmission destination. The SIP server 70 transmits the ACK command to the multi-function device 90. According thereto, a communication session corresponding to the medium type "video" included in the INVITE command is established between the multi-function device 10 and the multi-function device 90.

Next, in step S84, the target data communication unit 52 transmits and receives communication target data (that is, audio data and video data) to and from the multi-function device 90 using the communication session established in step S82 without via the SIP server 70. When the process in step S84 ends, the default communication process in Fig. 5 ends.

On the other hand, if the multi-function device 10 does not receive the 2000K command but receives the NG command (that is, NO in step S82), the default communication process in Fig. 5 ends. In this case, a communication session is not established between the multi-function device 10 and the multi-function device 90, and transmission and reception of target data are not performed. When the default communication process (step S32 in Fig. 3) in Fig. 5 ends, the main process in Fig. 3 ends.

As described above, if the multi-function device 10 is in the specific state (YES in step S30), the user of the multi-function device 10 is in a state of making a contract with any one provider registered in the enterprise-number list 36. Therefore, if the multi-function device 10 is in the specific state, the SIP server 70 may not realize the IPTV phone function and can realize the IP voice phone function as long as the SIP server 70 is not changed to a specification capable of realizing the IPTV phone function. Therefore, the multi-function device 10 stores "audio" as the first rank in step S36 of Fig. 3, and preferentially transmits the INVITE command of "m=audio" having a high possibility that a communication session is established. On the other hand, if the multi-function device 10 is not in the specific state (NO in step S32 of Fig. 3), there is a high possibility that the SIP server 70 realizes the IPTV phone function. Therefore, if the multi-function device 10 is not in the specific state, the multi-function device 10 transmits the INVITE command of "m=video" (refer to step S80 of Fig. 5). With this configuration, the multi-function device 10 can transmit an appropriate INVITE command depending on whether or not the multi-function device 10 is in the specific state. That is, it is possible to suppress an INVITE command having a low possibility that a communication session is established. Accordingly, it is possible to suppress an increase in the communication load between the multi-function device 10 and the multi-function device 90.

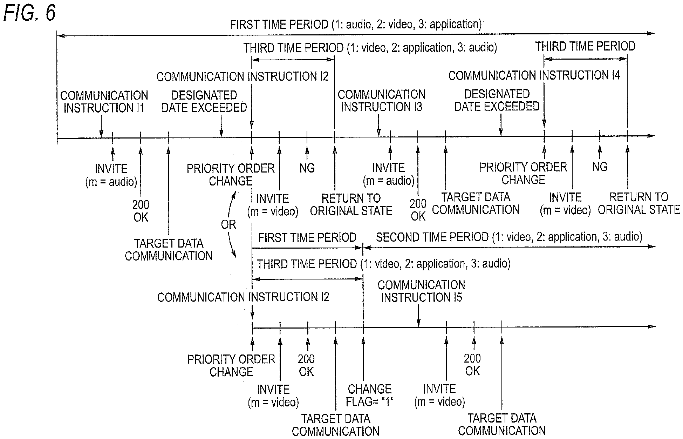

### (DETAILED EXAMPLE: TIME CHART IN Fig. 6)

A detailed example of the processes of the multi-function device 10 realized according to the above-described flowcharts in Figs. 2 to 5 will be described. In the example shown in Fig. 6, the multi-function device 10 is in the specific state. For this reason, the SIP server 70 may not realize the IPTV phone function and can realize the IP voice phone function as long as the SIP server 70 is not changed to a specification capable of realizing the IPTV phone function. Therefore, in step S36 of Fig. 3, the operation control unit 54 stores the first rank "audio", the second rank "video", and the third rank "application" in the priority order table 40 as a priority order of the respective medium types. Hereinafter, this priority order is referred to as a "default priority order". In addition, in step S36, the operation control unit 54 stores the change flag "0" in the priority order table 40. In this state, if a communication instruction 11 (that is, a designation operation of the SIPURI of the multi-function device 90) is input before the present date exceeds the designated date, the request execution unit 50 initially transmits the INVITE command including "m=audio" according to the default priority order. Thereby, a communication session is appropriately established between the multi-function device 10 and the multi-function device 90. The target data communication unit 52 transmits and receives target data (that is, audio data) to and from the multi-function device 90 according to the medium type "audio". Incidentally, hereinafter, a time period where the default priority order is correlated with the SIPURI of the multi-function device 90 and is continuously stored in the priority order table 40 is referred to as a "first time period". On the other hand, in a case where the communication session is not established between the multi-function device 10 and the multi-function device 90 even if the INVITE command including "m=audio" is transmitted (in a case where the multi-function device 10 does not receive the 2000K command but receives the NG command even if the communication instruction 11 is input and the request execution unit 50 of the multi-function device 10 transmits the INVITE command including "m=audio" to the SIP server 70 by designating the SIPURI of the multi-function device 90) in the first time period, the request execution unit 50 of the multi-function device 10 transmits an INVITE command including the next rank medium type (i.e., the INVITE command including "m=video") to the SIP server 70 by designating the SIPURI of the multi-function device 90.

As described above, there is a possibility that the SIP server 70 may be changed to a specification capable of realizing the IPTV phone function in the future. In order to confirm whether or not there is a change of specifications, if a communication instruction 12 is input after the present disclosure exceeds the designated date, the operation control unit 54 temporarily changes the default priority order in the priority order table 40 to another priority order (step S42 of Fig. 3). Another priority order described above is the first rank "video", the second rank "application", and the third rank "audio". Hereinafter, this priority order is referred to as a "changed priority order". In this state, the request execution unit 50 initially tries transmission of the INVITE command including "m=video". Incidentally, hereinafter, a time period where the changed priority order is correlated with the SIPURI of the multi-function device 90 and is temporarily stored in the priority order table 40 is referred to as a "third time period". Further, the changed priority order is a priority order which is temporarily used to confirm whether or not a specification of the SIP server 70 is changed. That is, if a communication session is not established by the INVITE command including "m=video", the changed priority order is changed to the default priority order again. Therefore, it may be regarded that the third time period where the changed priority order is temporarily stored is included in the first time period where the default priority order is continuously stored.

### (IN CASE WHERE THE SIP SERVER 70 IS NOT CHANGED TO SPECIFICATION CAPABLE OF REALIZING IPTV PHONE FUNCTION)

A case will be described in which the SIP server 70 is not changed to a specification capable of realizing the IPTV phone function when a communication instruction 12 is input. In this case, as shown in the upper part of Fig. 6, a communication session is not established even if the INVITE command including "m=video" is transmitted during the third time period (the multi-function device 10 receives the NG command). Therefore, the operation control unit 54 returns the changed priority order to the default priority order (step S52 of Fig. 3). In addition, the operation control unit 54 updates the designated date (step S54 of Fig. 3). In this example, the first time period is continued.

When the first time period is continued, if a communication instruction 13 is input before the present date exceeds the designated date updated, the multi-function device 10 performs the same process as the case where the above-described communication instruction I1 is input, according to the default priority order. In addition, if a communication instruction I4 is input after the present date exceeds the designated date updated, the multi-function device 10 performs the same process as the case where the above-described communication instruction 12 is input, according to the changed priority order.

### (IF SIP SERVER 70 IS CHANGED TO SPECIFICATION CAPABLE OF REALIZING IPTV PHONE FUNCTION)

A case will be described in which the SIP server 70 is changed to a specification capable of realizing the IPTV phone function when the communication instruction 12 is input. In this case, as shown in the lower part of Fig. 6, a communication session is established by the INVITE command including "m=video". In this case, the target data communication unit 52 transmits and receives target data (that is, audio data and video data) to and from the multi-function device 90 according to the medium type "video". Next, the operation control unit 54 changes the change flag correlated with the SIPURI of the multi-function device 90 to "1" (YES in step S48 of Fig. 3 and S50). In this example, the changed priority order is maintained without returning to the default priority order. In this case, the changed priority order is not changed to another priority order, and the changed priority order is continuously stored. That is, there is a transition to a time period where the changed priority order is correlated with the SIPURI of the multi-function device 90 and is continuously stored in the priority order table 40. Hereinafter, the time period is referred to as a "second time period".

If a communication instruction 15 is input after there is the transition to the second time period, the request execution unit 50 initially transmits the INVITE command including "m=video" according to the changed priority order. Thereby, a communication session is appropriately established between the multi-function device 10 and the multi-function device 90. In this case, the target data communication unit 52 transmits and receives target data (that is, audio data and video data) to and from the multi-function device 90 according to the medium type "video".

### (EFFECTS OF EXEMPLARY EMBODIMENT)

The communication system 2 according to the exemplary embodiment has been described in detail, during the first time period shown in Fig. 6, if a communication session is not established by the INVITE command including "m=audio", the INVITE command including "m=video" is transmitted. For this reason, even if the NG command is transmitted because the medium type included in the received INVITE command is an unavailable medium type (the above-described specific type), the multi-function device 90 can repeatedly transmit the INVITE command while changing information included in the INVITE command so as to establish an appropriate session between the multi-function device 10 and the multi-function device 90.

Further, in the exemplary embodiment, as shown in Fig. 6, during the first time period (for example, also referred to as a "first operation mode" in some cases), the INVITE command including the "m=audio" is initially transmitted, and, during the second time period (for example, also referred to as a "second operation mode" in some cases), the INVITE command including "m=video" is initially transmitted. If the communication instruction 12 is input after the designated date is exceeded, there is a transition to the third time period (for example, also referred to as a "third operation mode" in some case) within the first time period. Here, if a communication session is not established by the INVITE command including "m=video" (the upper part of Fig. 6), the first time period is continued. On the other hand, if a communication session is established by the INVITE command including "m=video" (the upper part of Fig. 6), there is a transition from the third time period within the first time period to the second time period. If the communication instruction 15 is input after there is the transition to the second time period, the INVITE command including "m=video" having a high possibility that a communication session may be established is initially transmitted. For this reason, there is a low possibility that the INVITE command including "m=audio" may be transmitted. According to the exemplary embodiment, it is possible to suppress the INVITE command having a low possibility that a communication session may be established from being transmitted. Therefore, it is possible to suppress an increase in the communication load between the multi-function device 10 and the multi-function device 90.

Further, if the first time period is continued (the upper part of Fig. 6) and the communication instruction 13 is input after the designated date is exceeded, the INVITE command including "m=audio" having a high possibility that a communication session may be established is initially transmitted. For this reason, there is a low possibility that the INVITE command including "m=video" may be transmitted. It is possible to suppress the INVITE command having a low possibility that a communication session may be established from being transmitted. Therefore, it is possible to suppress an increase in the communication load between the multi-function device 10 and the multi-function device 90.

In the multi-function device 90 (a device which is a communication party) or the SIP server 70, there is a possibility that available medium types may be changed due to firmware update or replacement of the device by a user. If a medium type is changed, a transmission side device (the multi-function device 10) may not know the change unless the transmission side device receives a notification of the change. Thus, in a case where a medium type unavailable until now is changed to an available type, or a medium type available until now is changed to an unavailable type, the multi-function device 10 may not take measures. Here, the multi-function device 10 according to the exemplary embodiment transmits the INVITE command where a priority order is changed at a predetermined timing. Therefore, even if a medium type available to the multi-function device 90 or the SIP server 70 is changed, it is possible to transmit the INVITE command in an order of suppressing the communication load between the multi-function device 10 and the multi-function device 90.

In a case where the multi-function device 10 is in the specific state, if a communication session is not established through transmission of the INVITE command including "m=video", it indicates that the multi-function device 90 or the SIP server 70 is not changed to a specification capable of realizing the IPTV phone function ("m=video"). In this case, the multi-function device 10 according to the exemplary embodiment updates the designated date. Therefore, it is possible to suppress an increase in the communication load between the multi-function device 10 and the multi-function device 90 as compared with a case where transmission of the INVITE command including "m=video" is tried each time communication is performed.

Further, in the exemplary embodiment, in order to perform each of the above-described processes for each communication destination device (SIPURI), it is possible to transmit an INVITE command in an appropriate priority order for each communication destination device.

Correspondence relationships between the respective elements of the exemplary embodiment and the respective elements of the present disclosure are described. The three kinds of information, "audio", "video", and "application" is an example of "a plurality of kinds of information". The "audio" and "video" are respectively an example of "the first kind of information" and "the second kind of information". In addition, the terms "a plurality of kinds of information" is also referred to as "a plurality of kinds of information corresponding to other medium types". The INVITE command including "m=audio" and the INVITE command including "m=video" are respectively an example of "the first kind of communication request" and "the second kind of communication request". The INVITE command including "m=video" transmitted in step S80 of Fig. 5 is an example of "the third kind of communication request". The default priority order and the changed priority order are respectively an example of "the first kind of data" and "the second kind of data".

### <SECOND EXEMPLARY EMBODIMENT>

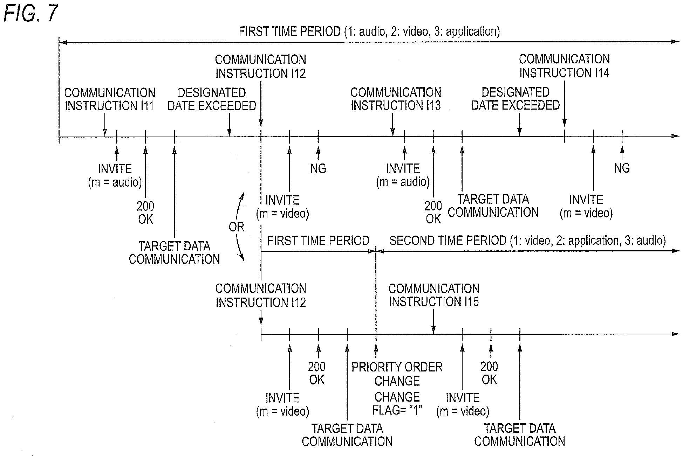

The second exemplary embodiment will be described mainly based on a difference with the first exemplary embodiment with reference to the time chart in Fig. 7. A process in a case where a communication instruction 111 is input before the designated date is exceeded during the first time period is the same as the process in the case where the communication instruction I1 is input in the example shown in Fig. 6. Here, in the second exemplary embodiment, a process in a case where a communication instruction 112 is input after the designated date is exceeded is different from the process in the case where the communication instruction 12 is input in the example shown in Fig. 6. That is, the operation control unit 54 does not temporarily change the default priority order in the priority order table 40 to the changed priority order. However, the request execution unit 50 initially transmits the INVITE command including "m=video" according to the changed priority order.

### (IN CASE WHERE THE SIP SERVER 70 IS NOT CHANGED TO SPECIFICATION CAPABLE OF REALIZING IPTV PHONE FUNCTION)

As shown in the upper part of Fig. 7, a communication session is not established by the INVITE command including "m=video". In this case, the operation control unit 54 updates the designated date. The first time period is continued. Thereafter, if a communication instruction 113 is input before the designated date updated is exceeded, the multi-function device 10 executes the same process as the case where the communication instruction 111 is input. In addition, if a communication instruction 114 is input after the designated date updated is exceeded, the multi-function device 10 executes the same process as the case where the communication instruction 112 is input.

### (IN CASE WHERE THE SIP SERVER 70 IS CHANGED TO SPECIFICATION CAPABLE OF REALIZING IPTV PHONE FUNCTION)

As shown in the lower part of Fig. 7, a communication session is established by the INVITE command including "m=video". The target data communication unit 52 transmits and receives target data (that is, audio data and video data) to and from the multi-function device 90 according to the medium type "video". Next, the operation control unit 54 changes the default priority order in the priority order table 40 to the changed priority order. In addition, the operation control unit 54 changes the change flag to "1". In this case, the changed priority order is not changed to another priority order, and the changed priority order is continuously stored. That is, there is a transition to the second time period from the first time period. If a communication instruction 115 is input after there is the transition to the second time period, the request execution unit 50 initially transmits the INVITE command including "m=video" according to the changed priority order. Thereby, a communication session is appropriately established between the multi-function device 10 and the multi-function device 90. The target data communication unit 52 transmits and receives target data (that is, audio data and video data) to and from the multi-function device 90 according to the medium type "video".

### <MODIFICATION TO EXEMPLARY EMBODIMENTS>

As above, although the details of the exemplary embodiments have been described in detail, they are only an example, and thus do not limit the claims. The recitation in the claims covers various modifications and alterations of the above-described exemplary embodiments. For example, the following modifications may be employed.

### (MODIFIED EXEMPLARY EMBODIMENT 1)

In the above-described exemplary embodiments, the multi-function device 10 can communicate with the multi-function device 90 and the SIP server 70 via the Internet 6. Alternatively, the multi-function device 10 may communicate with the multi-function device 90 and the SIP server 70 via an NGN (Next Generation Network).

### (MODIFIED EXEMPLARY EMBODIMENT 2)

In the above-described exemplary embodiments, a priority order of the respective medium types is correlated with an SIPURI and is stored in the priority order table 40. Alternatively, a ranking flag ("1" or "0") may be correlated with the SIPURI and be stored in the memory 32. In this case, the request execution unit 50 may execute the first kind of request process if the ranking flag is "0" correlated with an SIPURI of a communication destination designated by a user, and execute the second kind of request process if the corresponding ranking flag is "1". In addition, in the modified example, the ranking flags "0" and "1" are respectively an example of "the first kind of data" and "the second kind of data".

### (MODIFIED EXEMPLARY EMBODIMENT 3)

In the above-described exemplary embodiments, when the priority order of the respective medium types is changed, the first rank medium type is changed to the lowest rank (the third rank), and the second rank and third rank medium types are changed to the first rank and the second rank, respectively. Alternatively, the first rank medium type and the second rank medium type may be exchanged, and the ranking of the third rank medium type may be maintained.

### (MODIFIED EXEMPLARY EMBODIMENT 4)

In the above-described exemplary embodiments, the operation control unit 54 does not change the changed priority order any more after the transition to the second time period. In other words, generally speaking, the operation control unit 54 enables the request execution unit 50 to execute only the second kind of request process after the transition to the second time period. Alternatively, the operation control unit 54 may enable the request execution unit 50 to try the first kind of request process at a predetermined timing after the transition to the second time period. In the corresponding trial, the operation control unit 54 may maintain the second time period if a communication session is not established by the first kind of communication request, and, in the corresponding trial, there may be a transition to the first time period again if a communication session is established by the first kind of communication request.

### (MODIFIED EXEMPLARY EMBODIMENT 5)

In the above-described exemplary embodiments, the operation control unit 54 temporarily changes a priority order of the respective medium types (S42) if the present date exceeds the designated date (YES in step S40 of Fig. 3) when target data is transmitted and received. That is, generally speaking, the predetermined timing is a timing where the target data is transmitted to and received from a communication destination device when the present date exceeds the designated date. Alternatively, the predetermined timing may be, for example, a timing where target data is to be transmitted to and received from a communication destination device after communication identifying information is designated as a transmission destination and the number of transmissions of a communication request exceeds a predetermined number. In addition, the predetermined timing may not be a timing where target data is to be transmitted to and received from a communication destination device but, for example, may be the date (for example, 0:00 of the first day of each month) set by a vendor of the communication device in advance.

### (MODIFIED EXEMPLARY EMBODIMENT 6)

In the above-described exemplary embodiments, for example, as shown in the example of the upper part of Fig. 6, the default priority order is temporarily changed to the changed priority order each time the designated date is exceeded. That is, generally speaking, the predetermined timing may be put twice or more in the first time period. Alternatively, the predetermined timing may be put only once. In other words, after the second kind of request process is tried during the first time period, the second kind of request process may not be tried again.

The technical elements described in the present specification or the drawings show technical usefulness singly or by various combinations, and are not limited to the combination recited in claims at the time of filing the application. In addition, the technique exemplified in the present specification or the drawings achieves a plurality of objects at the same time, and the achievement itself of one object thereof has the technical usefulness.

## Claims

1. A communication device (10) comprising:
a request execution unit (50) that is configured to execute one of a plurality of kinds of request processes including a first kind of request process and a second kind of request process in order to establish a communication session between the communication device (10) and a communication destination device (90) when target data is to be transmitted to and received from the communication destination device (90), the communication destination device (90) having a Session Initiation Protocol Uniform Resource Identifier, SIPURI,
wherein the first kind of request process (S46) includes: transmitting, to the communication destination device (90), a first kind of INVITE command including a first kind of medium type of a plurality of kinds of medium types; and then, if the communication session is not established through the transmission of the first kind of INVITE command, transmitting, to the communication destination device (90), a second kind of INVITE command including a second kind of medium type of the plurality of kinds of medium types, and
wherein the second kind of request process (S44) includes: transmitting the second kind of INVITE command to the communication destination device (90); and then, if the communication session is not established through the transmission of the second kind of INVITE command, transmitting the first kind of INVITE command to the communication destination device (90);
a target data communication unit (52) that is configured to transmit and receive the target data to and from the communication destination device (90) in a state where a communication session is established between the communication device (10) and the communication destination device (90); and
a memory (32) storing a priority order table (40) which correlates SIPURIs, priority orders of the respective medium types, and designated times and dates,
wherein a first time period is a time period where a first priority order is continuously stored in the memory (32),
wherein a second time period is a time period where a second priority order is continuously stored in the memory (32), and
an operation control unit (54) that is configured to control an operation of the request execution unit (50), the operation control unit being configured to (see Fig. 6):
control the request execution unit (50), during the first time period, when a priority rank of the first kind of medium type is higher than a priority rank of the second kind of medium type, to execute the first kind of request process each time the target data is transmitted to and received from the communication destination device (90);
control the request execution unit (50) at a predetermined timing within the first time period, where the target data is to be transmitted to and received from the communication destination device (90) in a state where the present time and date exceeds the designated time and date correlated with the SIPURI of the communication destination device (90), to try the second kind of request process;
if the communication session is not established through the transmission of the second kind of communication request in the trial of the second kind of request process, maintain the first time period, execute again the first kind of request process and update the designated time and date stored in the memory (32); and
if the communication session is established through the transmission of the second kind of communication request in the trial, change a state where the first priority order is continuously stored in the memory to a state where the second priority order is continuously stored in the memory (32) so as to transition from the first time period to the second time period following the first time period in which the request execution unit (50) is controlled to execute the second kind of request process each time the target data is to be transmitted to and received from the communication destination device (90).

2. The communication device according to claim 1, further comprising a determination unit (56) that is configured to determine whether or not the communication device is in a specific state of being capable of establishing the communication session via a specific server,
wherein the plurality of kinds of request processes further include a third kind of request process (S32) (see also Fig. 5),
wherein the third kind of request process includes a process (S80) in which a third kind of communication request, including a predetermined medium type of the plurality of kinds of medium types, is transmitted to the communication destination device (90), and
wherein the third kind of request process does not include a process in which other kinds of communication requests are transmitted to the communication destination device (90) if the communication session is not established through the transmission of the third kind of communication request (S82: NO), and
wherein if it is determined that the communication device is in the specific state (S30: YES), the operation control unit (54) is configured to:
control the request execution unit (50) to execute the first kind of request process each time the target data is to be transmitted to and received from the communication destination device (90) during the first time period; and
control the request execution unit (50) to try the second kind of request process at the predetermined timing within the first time period, and
wherein if it is determined that the communication device is not in the specific state (S30: NO), the operation control unit (54) is configured to control the request execution unit (50) to execute the third kind of request process each time the target data is to be transmitted and received from the communication destination device (90) during the first time period.

3. The communication device according to claim 2,
wherein the determination unit (56) is configured to perform the determination when the communication device is activated, and
wherein the operation control unit (54) is configured to confirm a result of the determination each time the target data is to be transmitted to and received from the communication destination device (90).

4. The communication device according to claim 1, 2 or 3,
wherein the first time period includes, within the first time period, a third time period during which the second priority order may be temporarily stored in the memory (32), and
wherein the operation control unit (54) is configured to:
control the memory (32) to temporarily store the second priority order therein instead of the first priority order at the predetermined timing within the first time period so as to transition to the third time period within the first time period;
if the communication session is not established through the transmission of the second communication request in the trial, control the memory (32) to store the first priority order therein instead of the second priority order so as to continue the first time period; and
if the communication session is established through the transmission of the second communication request in the trial, maintain the state where the second priority order is stored in the memory (32) so as to transition the third time period within the first time period to the second time period.

5. The communication device according to any one of claims 1 to 4,
wherein the operation control unit (54) is configured to control the request execution unit (50) not to try the first kind of request process during the second time period.

6. A computer program for a communication device, which, when run on a computer installed in the communication device, causes the communication device to execute:
a request execution process in which one of a plurality of kinds of request processes including a first kind of request process and a second kind of request process is executed in order to establish a communication session between the communication device and a communication destination device when target data is to be transmitted to and received from the communication destination device, the communication destination device having a Session Initiation Protocol Uniform Resource Identifier, SIPURI,
wherein the first kind of request process includes: transmitting to the communication destination device, a first kind of INVITE command including a first kind of medium type of a plurality of kinds of medium types; and then, if the communication session is not established through the transmission of the first kind of INVITE command, transmitting to the communication destination device, a second kind of INVITE command including a second kind of medium type of the plurality of kinds of medium types, and
wherein the second kind of request process includes: transmitting the second kind of INVITE command to the communication destination device; and then, if the communication session is not established through the transmission of the second kind of INVITE command, transmitting the first kind of INVITE command to the communication destination device;
storing a priority order table (40) which correlates SIPURIs, priority orders of the respective medium types and designated times and dates,
wherein a first time period is a time period where a first priority order is continuously stored,
wherein a second time period is a time period where a second priority order is continuously stored, and
a target data communication process in which the target data is transmitted to and received from the communication destination device in a state where a communication session is established between the communication device and the communication destination device,
wherein the request execution process includes:
executing, during the first time period, when a priority rank of the first kind of medium type is higher than a priority rank of the second kind of medium type, the first kind of request process each time the target data is transmitted to and received from the communication destination device;
at a predetermined timing within the first time period, where the target data is to be transmitted to and received from the communication destination device (90) in a state where the present time and date exceeds the designated time and date correlated with the SIPURI of the communication destination device (90), trying the second kind of request process at a predetermined timing within the first time period;
if the communication session is not established through the transmission of the second kind of communication request in the trial of the second kind of request process, continuing the first time period and executing again the first kind of request process and updating the stored designated time and date; and
if the communication session is established through the transmission of the second kind of communication request in the trial, change a state where the first priority order is continuously stored to a state where the second priority order is continuously stored so as to transition from the first time period to a second time period following the first time period in which the second kind of request process is executed each time the target data is to be transmitted to and received from the communication destination device.

## Patentansprüche

1. Kommunikationsvorrichtung (10) umfassend:
eine Anforderungsausführungseinheit (50), die konfiguriert ist, um einen einer Vielzahl von Arten von Anforderungsprozessen auszuführen beinhaltend eine erste Art von Anforderungsprozess und eine zweite Art von Anforderungsprozess, um eine Kommunikationssitzung zwischen der Kommunikationsvorrichtung (10) und einer Kommunikationszielvorrichtung (90) einzurichten, wenn Zieldaten an die Kommunikationszielvorrichtung (90) gesendet und von dieser empfangen werden sollen, wobei die Kommunikationszielvorrichtung (90) einen Session Initiation Protocol Uniform Resource Identifier, SIPURI, aufweist,
wobei die erste Art von Anforderungsprozess (S46) beinhaltet: Senden, an die Kommunikationszielvorrichtung (90), einer ersten Art von INVITE-Befehl, die eine erste Art von Medienarten einer Vielzahl von Medienarten beinhaltet, und dann, wenn die Kommunikationssitzung nicht durch die Sendung der ersten Art von INVITE-Befehl eingerichtet ist, Senden, an die Kommunikationszielvorrichtung (90), einer zweiten Art von INVITE-Befehl, die eine zweite Art von Medienarten der Vielzahl von Medienarten beinhaltet, und
wobei die zweite Art von Anforderungsprozess (S44) beinhaltet: Senden der zweiten Art von INVITE-Befehl an die Kommunikationszielvorrichtung (90); und dann, wenn die Kommunikationssitzung nicht durch die Sendung der zweiten Art von INVITE-Befehl eingerichtet ist, Senden der ersten Art von INVITE-Befehl an die Kommunikationszielvorrichtung (90);
eine Zieldatenkommunikationseinheit (52), die konfiguriert ist, um die Zieldaten zu und von der Kommunikationszielvorrichtung (90) in einem Zustand zu senden und zu empfangen, in dem eine Kommunikationssitzung zwischen der Kommunikationsvorrichtung (10) und der Kommunikationszielvorrichtung (90) eingerichtet ist; und
einen Speicher (32), der eine Prioritätsreihenfolgetabelle (40) speichert, die SIPURIs, Prioritätsreihenfolgen der jeweiligen Medienarten und benannte Zeiten und Daten korreliert,
wobei eine erste Zeitdauer eine Zeitdauer ist, in der eine erste Prioritätsreihenfolge kontinuierlich in dem Speicher (32) gespeichert wird,
wobei eine zweite Zeitdauer eine Zeitdauer ist, in der eine zweite Prioritätsreihenfolge kontinuierlich in dem Speicher (32) gespeichert wird, und
eine Betriebssteuereinheit (54), die konfiguriert ist, um einen Betrieb der Anforderungsausführungseinheit (50) zu steuern, wobei die Betriebssteuereinheit konfiguriert ist, um (siehe Fig. 6):
die Anforderungsausführungseinheit (50) während der ersten Zeitdauer zu steuern, wenn ein Prioritätsrang der ersten Art von Medienart höher ist als ein Prioritätsrang der zweiten Art von Medienart, um den die erste Art von Anforderungsprozess jedes Mal auszuführen, wenn die Zieldaten an die Kommunikationszielvorrichtung (90) gesendet und von dieser empfangen werden;
die Anforderungsausführungseinheit (50) zu einem vorbestimmten Zeitpunkt innerhalb der ersten Zeitdauer zu steuern, in der die Zieldaten an die Kommunikationszielvorrichtung (90) in einem Zustand gesendet und von dieser empfangen werden sollen, in dem die aktuelle Zeit und das Datum die benannte Zeit überschreitet, die mit dem SIPURI der Kommunikationszielvorrichtung (90) korreliert ist, um die zweite Art von Anforderungsprozess zu versuchen;
wenn die Kommunikationssitzung nicht durch die Sendung der zweiten Art von Kommunikationsanforderung in dem Versuch der zweiten Art von Anforderungsprozess eingerichtet wird, die erste Zeitdauer beizubehalten, die erste Art von Anforderungsprozess erneut auszuführen und die benannte Zeit und das Datum, die in dem Speicher (32) gespeichert sind, zu aktualisieren; und
wenn die Kommunikationssitzung durch die Sendung der zweiten Art von Kommunikationsanforderung im Versuch eingerichtet wird, einen Zustand, in dem die erste Prioritätsreihenfolge kontinuierlich im Speicher gespeichert wird, zu einem Zustand zu ändern, in dem die zweite Prioritätsreihenfolge kontinuierlich im Speicher (32) gespeichert wird, um von der ersten Zeitdauer in die zweite Zeitdauer überzugehen, die auf die erste Zeitdauer folgt, in der die Anforderungsausführungseinheit (50) gesteuert wird, um die zweite Art von Anforderungsprozess jedes Mal auszuführen, wenn die Zieldaten an die Kommunikationszielvorrichtung (90) gesendet und von dieser empfangen werden sollen.

2. Kommunikationsvorrichtung nach Anspruch 1, ferner umfassend Bestimmungseinheit (56), die konfiguriert ist, um zu bestimmen, ob die Kommunikationsvorrichtung sich in einem bestimmten Zustand befindet oder nicht, um in der Lage zu sein, die Kommunikationssitzung über einen spezifischen Server einzurichten,
wobei die Vielzahl von Arten von Anforderungsprozessen ferner eine dritte Art von Anforderungsprozess (S32) beinhalten (siehe auch Fig. 5),
wobei die dritte Art von Anforderungsprozess einen Prozess (S80) beinhaltet, der eine vorbestimmte Medienart der Vielzahl von Arten von Medientypen beinhaltet, an die Kommunikationszielvorrichtung (90) gesendet wird, und
wobei die dritte Art von Anforderungsprozess keinen Prozess beinhaltet, in dem andere Arten von Kommunikationsanforderungen an die Kommunikationszielvorrichtung (90) gesendet werden, wenn die Kommunikationssitzung nicht durch die Sendung der dritten Art von Kommunikationsanforderung (S82: NO) eingerichtet wird, and
wobei, wenn bestimmt wird, dass die Kommunikationsvorrichtung sich in dem spezifischen Zustand befindet (S30: YES), die Betriebssteuereinheit (54) konfiguriert ist, um:
die Anforderungsausführungseinheit (50) zu steuern, um die erste Art von Anforderungsprozess jedes Mal auszuführen, wenn die Zieldaten während der ersten Zeitdauer an die Kommunikationszielvorrichtung (90) gesendet und von dieser empfangen werden sollen; und
die Anforderungsausführungseinheit (50) zu steuern, um die zweite Art von Anforderungsprozess zu dem vorbestimmten Zeitpunkt innerhalb der ersten Zeitdauer zu versuchen, und
wobei, wenn bestimmt wird, dass die Kommunikationsvorrichtung sich nicht in dem spezifischen Zustand befindet (S30: NO), die Betriebssteuereinheit (54) konfiguriert ist, um die Anforderungsausführungseinheit (50) zu steuern, um die dritte Art von Anforderungsprozess jedes Mal auszuführen, wenn die Zieldaten während der ersten Zeitdauer an die Kommunikationszielvorrichtung (90) gesendet und von dieser empfangen werden sollen.

3. Kommunikationsvorrichtung nach Anspruch 2,
wobei die Bestimmungseinheit (56) konfiguriert ist, um die Bestimmung durchzuführen, wenn die Kommunikationsvorrichtung aktiviert ist, und
wobei die Betriebssteuereinheit (54) konfiguriert ist, um ein Ergebnis der Bestimmung jedes Mal zu bestätigen, wenn die Zieldaten an die Kommunikationszielvorrichtung (90) gesendet und von dieser empfangen werden sollen.

4. Kommunikationsvorrichtung nach Anspruch 1, 2 oder 3,
wobei die erste Zeitdauer innerhalb der ersten Zeitdauer eine dritte Zeitdauer beinhaltet, während welcher die zweite Prioritätsreihenfolge vorübergehend im Speicher (32) gespeichert werden kann, und
wobei die Betriebssteuereinheit (54) konfiguriert ist, um:
den Speicher (32) zu steuern, um die zweite Prioritätsreihenfolge anstatt der ersten Prioritätsreihenfolge zu dem vorbestimmten Zeitpunkt innerhalb der ersten Zeitdauer vorübergehend darin zu speichern, um in die dritte Zeitdauer innerhalb der ersten Zeitdauer überzugehen;
wenn die Kommunikationssitzung nicht durch die Sendung der zweiten Kommunikationsanforderung in dem Versuch eingerichtet wird, den Speicher (32) zu steuern, um die erste Prioritätsreihenfolge anstatt der zweiten Prioritätsreihenfolge darin zu speichern, um die erste Zeitdauer fortzusetzen; und
wenn die Kommunikationssitzung durch die Sendung der zweiten Kommunikationsanforderung in dem Versuch eingerichtet wird, den Zustand beizubehalten, in dem die zweite Prioritätsreihenfolge in dem Speicher (32) gespeichert ist, um die dritte Zeitdauer innerhalb der ersten Zeitdauer in die zweite Zeitdauer überzugehen.

5. Kommunikationsvorrichtung nach einem der Ansprüche 1 bis 4,
wobei die Betriebssteuereinheit (54) konfiguriert ist, um die Anforderungsausführungseinheit (50) zu steuern, um die erste Art von Anforderungsprozess während der zweiten Zeitdauer nicht zu versuchen.

6. Computerprogramm für eine Kommunikationsvorrichtung, das, wenn es auf einem in der Kommunikationsvorrichtung installierten Computer ausgeführt wird, die Kommunikationsvorrichtung veranlasst, Folgendes auszuführen:
einen Anforderungsausführungsprozess, in dem eine Vielzahl von Arten von Anforderungsprozessen beinhaltend eine erste Art von Anforderungsprozess und eine zweite Art von Anforderungsprozess, um eine Kommunikationssitzung zwischen der Kommunikationsvorrichtung und einer Kommunikationszielvorrichtung einzurichten, wenn Zieldaten an die Kommunikationszielvorrichtung gesendet und von dieser empfangen werden sollen, wobei die Kommunikationszielvorrichtung einen Session Initiation Protocol Uniform Resource Identifier, SIPURI, aufweist,
wobei die erste Art von Anforderungsprozess beinhaltet: Senden, an die Kommunikationszielvorrichtung, einer ersten Art von INVITE-Befehl, die eine erste Art von Medienarten einer Vielzahl von Medienarten beinhaltet, und dann, wenn die Kommunikationssitzung nicht durch die Sendung der ersten Art von INVITE-Befehl eingerichtet ist, Senden, an die Kommunikationszielvorrichtung, einer zweiten Art von INVITE-Befehl, die eine zweite Art von Medienarten der Vielzahl von Medienarten beinhaltet, und
wobei die zweite Art von Anforderungsprozess beinhaltet: Senden der zweiten Art von INVITE-Befehl an die Kommunikationszielvorrichtung; und dann, wenn die Kommunikationssitzung nicht durch die Sendung der zweiten Art von INVITE-Befehl eingerichtet ist, Senden der ersten Art von INVITE-Befehl an die Kommunikationszielvorrichtung;
Speichern einer Prioritätsreihenfolgetabelle (40), die SIPURIs, Prioritätsreihenfolgen der jeweiligen Medienarten und benannte Zeiten und Daten korreliert,
wobei eine erste Zeitdauer eine Zeitdauer ist, in der eine erste Prioritätsreihenfolge kontinuierlich gespeichert wird,
wobei eine zweite Zeitdauer eine Zeitdauer ist, in der eine zweite Prioritätsreihenfolge kontinuierlich gespeichert wird, und
einen Zieldatenkommunikationsprozess, in dem die Zieldaten zu und von der Kommunikationszielvorrichtung (90) in einem Zustand gesendet und empfangen werden, in dem eine Kommunikationssitzung zwischen der Kommunikationsvorrichtung (10) und der Kommunikationszielvorrichtung (90) eingerichtet ist; und
wobei der Anforderungsausführungsprozess beinhaltet:
Ausführen, während der ersten Zeitdauer, wenn ein Prioritätsrang der ersten Art von Medienart höher ist als ein Prioritätsrang der zweiten Art von Medienart, der ersten Art von Anforderungsprozess jedes Mal, wenn die Zieldaten an die Kommunikationszielvorrichtung gesendet und von dieser empfangen werden;
zu einem vorbestimmten Zeitpunkt innerhalb der ersten Zeitdauer, in der die Zieldaten an die Kommunikationszielvorrichtung (90) in einem Zustand gesendet und von dieser empfangen werden sollen, in dem die aktuelle Zeit und das Datum die benannte Zeit überschreitet, die mit dem SIPURI der Kommunikationszielvorrichtung (90) korreliert ist, die zweite Art von Anforderungsprozess zu einem vorbestimmten Zeitpunkt innerhalb der ersten Zeitdauer zu versuchen;
wenn die Kommunikationssitzung nicht durch die Sendung der zweiten Art von Kommunikationsanforderung in dem Versuch der zweiten Art von Anforderungsprozess eingerichtet wird, die erste Zeitdauer fortzusetzen, und die erste Art von Anforderungsprozess erneut auszuführen und die benannte Zeit und das Datum zu aktualisieren; und
wenn die Kommunikationssitzung durch die Sendung der zweiten Art von Kommunikationsanforderung im Versuch eingerichtet wird, einen Zustand, in dem die erste Prioritätsreihenfolge kontinuierlich im Speicher gespeichert wird, zu einem Zustand zu ändern, in dem die zweite Prioritätsreihenfolge kontinuierlich gespeichert wird, um von der ersten Zeitdauer in die zweite Zeitdauer überzugehen, die auf die erste Zeitdauer folgt, in der die zweite Art von Anforderungsprozess jedes Mal ausgeführt wird, wenn die Zieldaten an die Kommunikationszielvorrichtung gesendet und von dieser empfangen werden sollen.

## Revendications

1. Dispositif de communication (10) comprenant :
une unité d'exécution de demande (50) qui est configurée pour exécuter l'un d'une pluralité de types de processus de demande comprenant un premier type de processus de demande et un second type de processus de demande afin d'établir une session de communication entre le dispositif de communication (10) et un dispositif de destination de communication (90) lorsque des données cibles doivent être transmises au dispositif de destination de communication (90) et reçues à partir de celui-ci, le dispositif de destination de communication (90) possédant un identifiant de ressource uniforme du protocole d'ouverture de session, SIPURI de l'anglais *Session Initiation Protocol Uniform Resource Identifier,*
dans lequel le premier type de processus de demande (S46) comprend : la transmission, au dispositif de destination de communication (90), d'un premier type de commande INVITE comprenant un premier genre de type de support parmi plusieurs genres de types de supports ; et ensuite, si la session de communication n'est pas établie par la transmission du premier type de commande INVITE, la transmission au dispositif de destination de communication (90), d'un second type de commande INVITE comprenant un second genre de type de support de la pluralité de genres de types de supports, et
dans lequel le second type de processus de demande (S44) comprend : la transmission du second type de commande INVITE au dispositif de destination de communication (90) ; et ensuite, si la session de communication n'est pas établie par la transmission du second type de commande INVITE, il comprend la transmission du premier type de commande INVITE au dispositif de destination de communication (90) ;
une unité de communication de données cible (52) qui est configurée pour transmettre les données cible au dispositif de destination de communication (90) et recevoir les données cible à partir de celui-ci dans un état dans lequel une session de communication est établie entre le dispositif de communication (10) et le dispositif de destination de communication (90) ; et
une mémoire (32) stockant une table d'ordre de priorité (40) qui met en corrélation les SIPURI, les ordres de priorité des types de support respectifs, ainsi que les dates et heures désignées,
dans laquelle une première période est une période où un premier ordre de priorité est stocké en continu dans la mémoire (32),
dans laquelle une seconde période est une période au cours de laquelle un second ordre de priorité est stocké en continu dans la mémoire (32), et
une unité de commande d'opération (54) qui est configurée pour commander une opération de l'unité d'exécution de demande (50), l'unité de commande d'opération étant configurée pour (voir la figure 6) :
commander l'unité d'exécution de demande (50), pendant la première période, lorsqu'un rang de priorité du premier type de support est supérieur à un rang de priorité du second type de support, pour exécuter le premier type de processus de demande à chaque fois que les données cibles sont transmises au dispositif de destination de communication (90) et reçues à partir de celui-ci ;
commander l'unité d'exécution de demande (50) à un instant prédéterminé pendant la première période, où les données cibles doivent être transmises au dispositif de destination de communication (90) et reçues à partir de celui-ci dans un état où l'heure et la date actuelles dépassent l'heure et la date désignées corrélées au SIPURI du dispositif de destination de communication (90), pour essayer le second type de processus de demande ;
si la session de communication n'est pas établie par la transmission du second type de demande de communication lors de l'essai du second type de processus de demande, conservez le premier délai, exécutez à nouveau le premier type de processus de demande et mettez à jour l'heure et la date spécifiées stockées dans la mémoire (32); et
si la session de communication est établie par la transmission du second type de demande de communication dans l'essai, changer un état dans lequel le premier ordre de priorité est stocké en continu dans la mémoire en un état dans lequel le second ordre de priorité est stocké en continu dans la mémoire (32) afin de passer de la première période à la seconde période suivant la première période dans laquelle l'unité d'exécution de demande (50) est contrôlée pour exécuter le second type de processus de demande chaque fois que les données cibles doivent être transmises au dispositif de destination de communication (90) et reçues à partir de celui-ci.

2. Dispositif de communication selon la revendication 1, comprenant en outre une unité de détermination (56) qui est configurée pour déterminer si le dispositif de communication est dans un état spécifique capable ou non d'établir la session de communication via un serveur spécifique,
dans lequel la pluralité de types de processus de demande comprennent en outre un troisième type de processus de demande (S32) (voir aussi la figure 5),
dans lequel le troisième type de processus de demande comprend un processus (S80) dans lequel un troisième type de demande de communication, comprenant un type de support prédéterminé de la pluralité de types de types de supports, est transmis au dispositif de destination de communication (90), et
dans lequel le troisième type de processus de demande n'inclut pas de processus dans lequel d'autres types de demandes de communication sont transmis au dispositif de destination de communication (90) si la session de communication n'est pas établie par la transmission du troisième type de demande de communication (S82: NON), et
dans lequel s'il est déterminé que le dispositif de communication est dans l'état spécifique (S30: OUI), l'unité de commande d'opération (54) est configurée pour :
commander à l'unité d'exécution de demande (50) d'exécuter le premier type de processus de demande chaque fois que les données cibles doivent être transmises au dispositif de destination de communication (90) et reçues à partir de celui-ci pendant la première période ; et
commander à l'unité d'exécution de demande (50) d'essayer le second type de processus de demande au moment prédéterminé pendant la première période, et
dans lequel, s'il est déterminé que le dispositif de communication n'est pas dans l'état spécifique (S30: NON), l'unité de commande d'opération (54) est configurée pour commander l'unité d'exécution de demande (50) afin qu'elle exécute le troisième type de processus de demande à chaque fois que les données cibles doivent être transmises au dispositif de destination de communication (90) et reçues à partir de celui-ci pendant la première période.

3. Dispositif de communication selon la revendication 2,
dans lequel l'unité de détermination (56) est configurée pour effectuer la détermination lorsque le dispositif de communication est activé, et
dans lequel l'unité de commande d'opération (54) est configurée pour confirmer un résultat de la détermination chaque fois que les données cibles doivent être transmises au dispositif de destination de communication (90) et reçues à partir de celui-ci.

4. Dispositif de communication selon la revendication 1, 2 ou 3,
dans lequel la première période comprend, dans la première période, une troisième période pendant laquelle le deuxième ordre de priorité peut être temporairement stocké dans la mémoire (32), et
dans lequel l'unité de commande d'opération (54) est configurée pour :
commander à la mémoire (32) de stocker temporairement le deuxième ordre de priorité dans celle-ci au lieu du premier ordre de priorité au moment prédéterminé dans la première période de manière à passer à la troisième période dans la première période ;
si la session de communication n'est pas établie par la transmission de la seconde demande de communication dans l'essai, commander la mémoire (32) pour y stocker le premier ordre de priorité au lieu du second ordre de priorité afin de poursuivre la première période ; et
si la session de communication est établie par la transmission de la deuxième demande de communication dans l'essai, conserver l'état dans lequel le deuxième ordre de priorité est stocké dans la mémoire (32) de manière à faire passer la troisième période dans la première période à la deuxième période.

5. Dispositif de communication selon l'une des revendications 1 à 4,
dans lequel l'unité de commande d'opération (54) est configurée pour commander l'unité d'exécution de demande (50) pour ne pas essayer le premier type de processus de demande pendant la seconde période.

6. Programme d'ordinateur pour un dispositif de communication qui, lorsqu'il est exécuté sur un ordinateur installé dans le dispositif de communication, provoque le dispositif de communication à exécuter :
un processus d'exécution de demande dans lequel l'un d'une pluralité de types de processus de demande comprenant un premier type de processus de demande et un second type de processus de demande est exécuté afin d'établir une session de communication entre le dispositif de communication et un dispositif de destination de communication lorsque des données cibles doivent être transmises au dispositif de destination de communication et reçues à partir de celui-ci, le dispositif de destination de communication possédant un identifiant de ressource uniforme du protocole d'ouverture de session, SIPURI de l'anglais *Session Initiation Protocol Uniform Resource Identifier,*
dans lequel le premier type de processus de demande comprend : la transmission, au dispositif de destination de communication, d'un premier type de commande INVITE comprenant un premier genre de type de support parmi plusieurs genres de types de supports ; et ensuite, si la session de communication n'est pas établie par la transmission du premier type de commande INVITE, la transmission au dispositif de destination de communication, d'un second type de commande INVITE comprenant un second genre de type de support de la pluralité de genres de types de supports, et
dans lequel le second type de processus de demande comprend : la transmission du second type de commande INVITE au dispositif de destination de communication ; et ensuite, si la session de communication n'est pas établie par la transmission du second type de commande INVITE, il comprend la transmission du premier type de commande INVITE au dispositif de destination de communication ;
le stockage d'une table d'ordre de priorité (40) qui met en corrélation les SIPURI, les ordres de priorité des types de support respectifs, ainsi que les dates et heures désignées,
dans laquelle une première période est une période où un premier ordre de priorité est stocké en continu dans la mémoire,
dans laquelle une seconde période est une période au cours de laquelle un second ordre de priorité est stocké en continu dans la mémoire, et
un processus de communication de données cibles dans lequel les données cibles sont transmises au dispositif destinataire de communication et reçues à partir de celui-ci dans un état dans lequel une session de communication est établie entre le dispositif de communication et le dispositif de destination de communication,
dans lequel le processus d'exécution de la demande comprend :
l'exécution, pendant la première période, lorsqu'un rang de priorité du premier type de support est supérieur à un rang de priorité du deuxième type de support, du premier type de processus de demande chaque fois que les données cibles sont transmises au dispositif de destination de communication et reçues à partir de celui-ci ;
à un instant prédéterminé durant la première période, où les données cibles doivent être transmises au dispositif de destination de communication (90) et reçues à partir de celui-ci dans un état où l'heure et la date actuelles dépassent l'heure et la date désignées en corrélation avec le SIPURI du dispositif de destination de communication (90), l'essai le deuxième type de processus de demande à un instant prédéterminé dans la première période de temps ;
si la session de communication n'est pas établie par la transmission du deuxième type de demande de communication lors de l'essai du deuxième type de processus de demande, la poursuite de première période et la réexécution du premier type de processus de demande et la mise à jour de l'heure et la date désignées stockées ; et
si la session de communication est établie par la transmission du deuxième type de demande de communication dans l'essai, le changement d'un état dans lequel le premier ordre de priorité est stocké en continu en un état dans lequel le deuxième ordre de priorité est stocké en continu de manière à passer de la première période à une deuxième période suivant la première période au cours de laquelle le deuxième type de processus de demande est exécuté chaque fois que les données cibles doivent être transmises au dispositif de destination de communication et reçues à partir de celui-ci.
